# EUROPEAN PATENT APPLICATION

(11) **EP 3 798 609 A1**
(43) Date of publication of application: **31.03.2021**
(21) Application number: 19914176.3
(22) Date of filing: 21.08.2019
(51) Int. Cl.: G01N 21/31, G01N 21/01

(54) **LIGHT MODULATION MICRO-NANO STRUCTURE, MICRO INTEGRATED SPECTROMETER AND SPECTRAL MODULATION METHOD**

(30) Priority: 31.07.2019 CN 201910699962
(71) Applicant: Tsinghua University, Beijing 100084 (CN)
(72) Inventor: CUI, Kaiyu, Beijing 100084 (CN); CAI, Xusheng, Beijing 100084 (CN); ZHU, Hongbo, Beijing 100084 (CN); HUANG, Yidong, Beijing 100084 (CN); LIU, Fang, Beijing 100084 (CN); ZHANG, Wei, Beijing 100084 (CN); FENG, Xue, Beijing 100084 (CN)
(74) Representative: Dilg, Haeusler, Schindelmann Patentanwaltsgesellschaft mbH
(86) International application number: PCT/CN2019/101766
(87) International publication number: WO 2021/017050

(57) **Abstract**

The present disclosure relates to the technical field of spectral devices, and specifically to an optical modulation micro-nano structure, a micro-integrated spectrometer and a spectrum modulation method. The optical modulation micro-nano structure includes an optical modulation layer located on a photoelectric detection layer that can modulate incident light to form differential responses on the photoelectric detection layer, so as to obtain an original spectrum by reconstruction, thereby overcoming the defects that the existing spectrometers rely too much on precise optical components, which makes spectrometers bulky, heavy and expensive. The optical modulation layer includes a base plate and at least one modulation unit; the base plate is provided on the photoelectric detection layer, and each of the modulation units is located on the base plate; each modulation unit is provided with several modulation holes penetrating into the base plate, and respective modulation holes inside a same modulation unit are arranged into a two-dimensional graphic structure with a specific pattern. Different two-dimensional graphic structures are used to modulate light at different wavelengths, and to improve the analysis accuracy of the spectrometer.

## Description

### CROSS-REFERENCE TO RELATED APPLICATION

The present application claims priority to Chinese Patent Application No. 201910699962.3, filed on July 31, 2019, entitled "Optical Modulation Micro-nano Structure, Micro-integrated Spectrometer and Spectrum Modulation Method", the disclosure of which is incorporated herein by reference in its entirety.

### FIELD OF TECHNOLOGY

The present disclosure relates to the technical field of spectral devices, and specifically to an optical modulation micro-nano structure, a micro-integrated spectrometer and a spectrum modulation method.

### BACKGROUND

The spectrometer is an instrument for obtaining spectral information. A spectrum carries rich information, and can be applicable for substance identification, detection and analysis, and has been widely used in the fields of agriculture, biology, chemistry, astronomy, medical treatment, environmental detection, semiconductor industry and etc.

According to the working principle, the existing commercial spectrometers can be divided into two types: monochromator-based spectrometers and Fourier transform-based spectrometers. Specifically: monochromator-based principle refers to that light having different wavelengths is separated in space by a grating, and then the light having different wavelengths is filtered out by a slit, and detected by a photosensitive element; Fourier transform-based principle refers to that the light is divided into two beams and interfered after passing through different optical paths, and the Fourier transform is performed on the interference spectrum to obtain the original spectrum.

The existing two types of spectrometers mentioned above have the following problems: in the first aspect, both types of the spectrometers require beam-splitting components that move precisely, such as gratings, prisms, slits or reflectors. As a result, the demand for these precise optical components makes the spectrometers bulky, very heavy and expensive. In the second aspect, each of the optical components of the spectrometer must be kept extremely clean and perfectly aligned so as to ensure the quality of the product, which makes the manufacture of the spectrometer expensive and the instrument very precise. Once optical components are out of alignment, it is very complicated to repair them, resulting in high maintenance costs. In the third aspect, the higher the accuracy of these two types of spectrometers, the longer the required distance the light travels, and the larger the required internal space, which is difficult to be applied to the consumable portable devices.

### SUMMARY

### (I) Technical problem to be solved

Embodiments of the present disclosure provide an optical modulation micro-nano structure, a micro-integrated spectrometer and a spectrum modulation method. By modulating incident light with the optical modulation micro-nano structure, the defects that the existing spectrometers are bulky, heavy and expensive due to an excessive reliance on precise optical components are overcome.

### (II) Technical solutions

In order to solve the technical problem above, the present disclosure provides an optical modulation micro-nano structure, including an optical modulation layer located on a photoelectric detection layer; wherein the optical modulation layer includes a base plate and at least one modulation unit; the base plate is provided on the photoelectric detection layer, and each of the modulation units is located on the base plate; each of the modulation units is provided with several modulation holes penetrating into the base plate, and respective modulation holes inside the same modulation unit are arranged into a two-dimensional graphic structure with a specific pattern.

In some embodiments, the specific pattern of the two-dimensional graphic structure includes that:
all the modulation holes inside the same two-dimensional graphic structure have a same specific cross-sectional shape and the respective modulation holes are arranged in an array in an order that sizes of structural parameters are gradually varied; and/or
the respective modulation holes inside the same two-dimensional graphic structure respectively have a specific cross-sectional shape and the respective modulation holes are combined and arranged according to the specific cross-sectional shape.

In some embodiments, the structural parameters of the modulation hole include an inner diameter, a length of a major axis, a length of a minor axis, an angle of rotation, a length of a side or the number of angles; the specific cross-sectional shape of the modulation hole includes a circle, an ellipse, a cross, a regular polygon, a star, or a rectangle.

In some embodiments, the arrangement order is being arranged row by row or column by column according to a preset period order when the respective modulation holes are arranged and combined according to the specific cross-sectional shape.

In some embodiments, a bottom of the modulation hole penetrates the base plate or does not penetrate the base plate.

In some embodiments, the optical modulation layer is directly generated on the photoelectric detection layer, and the generating of the optical modulation layer includes depositing or disposing a substrate on the photoelectric detection layer based on an etching of the substrate; or transferring a prepared optical modulation layer onto the photoelectric detection layer.

The present disclosure also provides a micro-integrated spectrometer, including:
the optical modulation micro-nano structure as described above, configured to perform light modulation on incident light to obtain a modulated spectrum;
a photoelectric detection layer located below the optical modulation micro-nano structure and configured to receive the modulated spectrums, and provide differential responses with respect to the modulated spectrum; and
a signal processing circuit layer located below the photoelectric detection layer and configured to reconstruct the differential responses to obtain an original spectrum.

In some embodiments, the micro-integrated spectrometer further includes:
a light-permeable medium layer located between the optical modulation micro-nano structure and the photoelectric detection layer.

In some embodiments, the photoelectric detection layer includes at least one detection unit, each modulation unit of the optical modulation micro-nano structure is correspondingly provided on at least one of the detection units respectively, and all the detection units are electrically connected to each other through the signal processing circuit layer.

The present disclosure also provides a spectrum modulation method, including:
performing light modulation on incident light using an optical modulation micro-nano structure to obtain a modulated spectrum;
receiving the modulated spectrum and providing differential responses with respect to the modulated spectrum using a photoelectric detection layer.
reconstructing the differential responses using a signal processing circuit layer to obtain an original spectrum.

### (III) Advantageous effects

The technical solutions above of the present disclosure have the following advantageous effects:
1. The optical modulation micro-nano structure of the present disclosure includes an optical modulation layer located on a photoelectric detection layer. Incident light can be modulated by the optical modulation layer to form differential responses on the photoelectric detection layer, so as to obtain the original spectrum by reconstruction. The optical modulation micro-nano structure can replace the various types of precise optical components in the existing spectrometers, so as to achieve the applicable type of the spectrometer in the field of micro-nano structures, so that the micro-integrated spectrometer can operate without gratings, prisms, reflecting mirrors or other similar spatial beam-splitting elements, thereby overcoming the defects that the existing spectrometers rely too much on the precise optical components, which makes spectrometers bulky, heavy and expensive.
2. The optical modulation layer includes a base plate and at least one modulation unit. The base plate is provided on the photoelectric detection layer, and each of the modulation units is located on the base plate and provided with several modulation holes penetrating into the base plate, and respective modulation holes inside the same modulation unit are arranged into a two-dimensional graphic structure with a specific pattern. Different two-dimensional graphic structures are used to modulate light at different wavelengths, wherein the modulating role includes but is not limited to the roles such as scattering, absorption, transmission, reflection, interference, surface plasmon polariton, resonance and etc. Differences in spectral response between different regions can also be improved by using the differences between the two-dimensional graphic structures, thereby improving the analysis accuracy of the spectrometer.
3. It is not necessary to consider the issues such as precise alignment and etc. for each of the modulation units in the optical modulation layer, and the spectrometer made on the basis of the optical modulation micro-nano structure not only can ensure high precision, but also does not need to increase the optical path. Therefore, the internal structure of the spectrometer does not need to be constructed too large so that the micro-integrated spectrometer is more convenient to use, and the measurement accuracy of the spectrometer will not be adversely affected. The size of the spectrometer can also be reduced to the chip level, with stable performance and reduced costs.

### BRIEF DESCRIPTION OF THE DRAWINGS

In order to more clearly describe the embodiments of the present disclosure or the technical solutions in the prior art, the drawings to be used in describing the embodiments or the prior art will be briefly described below. Obviously, the drawings in the following description are some embodiments of the present disclosure, for those of ordinary skill in the art, other drawings may also be obtained based on these drawings without any creative work.
Fig. 1 is a structural diagram of an optical modulation micro-nano structure of Embodiment I of the present disclosure;
Fig. 2 is a sectional view illustrating the optical modulation micro-nano structure of Embodiment I of the present disclosure;
Fig. 3 is a structural diagram illustrating the optical modulation layer of Embodiment I of the present disclosure;
Fig. 4 is a structural diagram illustrating the photoelectric detection layer of Embodiment I of the present disclosure;
Fig. 5 is a diagram illustrating the spectral detection effect of Embodiment I of the present disclosure;
Fig. 6 is a structural diagram illustrating the optical modulation layer of Embodiment II of the present disclosure;
Fig. 7 is a structural diagram illustrating the optical modulation micro-nano structure of Embodiment III of the present disclosure;
Fig. 8 is a sectional view illustrating the optical modulation micro-nano structure of Embodiment III of the present disclosure;
Fig. 9 is a structural diagram illustrating the optical modulation micro-nano structure of Embodiment III of the present disclosure;
Fig. 10 is a diagram illustrating a wavelength-strength relation of the spectral detection of Embodiment III of the present disclosure;
Fig. 11 is a diagram illustrating the spectral detection effect of Embodiment III of the present disclosure;
Fig. 12 is a sectional view illustrating the optical modulation micro-nano structure of Embodiment IV of the present disclosure;
Fig. 13 is a sectional view illustrating the optical modulation micro-nano structure of Embodiment VI of the present disclosure;
Fig. 14 is a sectional view illustrating the optical modulation micro-nano structure of Embodiment VII of the present disclosure;
Fig. 15 is a structural diagram illustrating the optical modulation layer of Embodiment VII of the present disclosure;
Fig. 16 and Fig. 17 are respectively a diagram illustrating the preparation process of the optical modulation micro-nano structure of Embodiment VIII of the present disclosure.

**Description of the reference numbers**

| | |
|---|---|
| 1' substrate | 1 optical modulation layer |
| 2 photoelectric detection layer | 3 signal processing circuit layer |
| 4 light-permeable medium layer | 5 modulation unit |
| 6. modulation hole | 7 detection unit |
| 8 gap | 11 first modulation unit |
| 12 second modulation unit | 13 third modulation unit |
| 14 fourth modulation unit | 15 fifth modulation unit |

### DETAILED DESCRIPTION

Implementations of the present disclosure are further described in detail in conjunction with the accompanying drawings and embodiments. The following embodiments are used to illustrate the present disclosure, but cannot be used to limit the scope thereof. Unless specified otherwise, the micro-nano structures mentioned in the present disclosure are all abbreviations for the optical modulation micro-nano structures.

Various embodiments of the present disclosure provide an optical modulation micro-nano structure capable of replacing the precise optical components in a spectrometer to achieve the precise modulation of incident light. By using the optical modulation micro-nano structure, the modulating role of light having different wavelengths can be flexibly achieved. The modulating role includes, but is not limited to, the scattering, absorption, projection, reflection, interference, surface plasmon polariton and resonance of light, so as to improve differences in the spectral response between different regions, thereby improving the analysis accuracy of the spectrometer.

The optical modulation micro-nano structure includes an optical modulation layer 1 located on a photoelectric detection layer 2. The optical modulation layer 1 is able to perform the modulation role mentioned above on the incident light. Modulation holes 6 inside a same modulation unit 5 on the optical modulation layer 1 are arranged into a two-dimensional graphic structure with a specific pattern. Different two-dimensional graphic structures are used to modulate light at different wavelengths, and differences in the spectral response between different regions can also be improved by using the differences between the two-dimensional graphic structures, thereby improving the analysis accuracy of the spectrometer.

On the basis of the micro-nano structure, the various embodiments of the present disclosure further provide a micro-integrated spectrometer. The spectrometer includes the optical modulation micro-nano structure, a photoelectric detection layer 2 and a signal processing circuit layer 3. The incident light can be modulated through the spectrometer by using the optical modulation layer 1 of the optical modulation micro-nano structure to form differential responses on the photoelectric detection layer 2, so as to obtain the original spectrum by reconstruction. The optical modulation micro-nano structure can replace the various types of precise optical components in the existing spectrometers, so as to achieve the applicable type of the spectrometer in the field of micro-nano structures, so that the micro-integrated spectrometer can operate without gratings, prisms, reflecting mirrors or other similar spatial beam-splitting elements, thereby overcoming the defects that the existing spectrometers are bulky, heavy and expensive due to an excessive reliance on the precise optical components.

The micro-nano structure and the micro-integrated spectrometer described in the present disclosure are described in detail below through several embodiments.

### Embodiment I

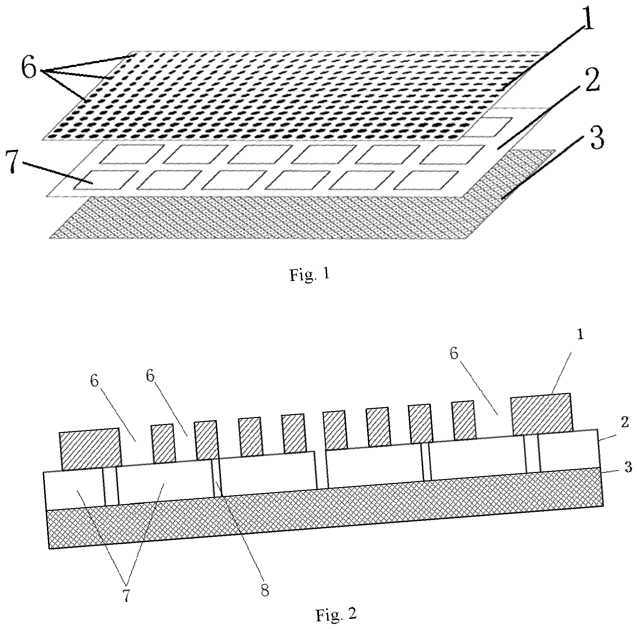

As shown in Fig. 1, in the micro-integrated spectrometer provided by Embodiment I, the optical modulation layer 1 on the optical modulation micro-nano structure includes a modulation unit 5. All the modulation holes 6 inside the modulation unit 5 penetrate through a base plate. All the modulation holes 6 inside the modulation unit 5 have same specific cross-sectional shapes. The oval shape shown in Fig. 1 is taken as an example in Embodiment I. All the modulation holes 6 are arranged in an array in an order that sizes of structural parameters are gradually varied to form a two-dimensional graphic structure. In this two-dimensional graphic structure, all the modulation holes 6 are arranged in an array, and all the modulation holes 6 are arranged row by column in an order from small to large of the length of a major axis, the length of a minor axis and the angle of rotation, so that all the modulation holes 6 as a whole form a modulation unit 5 on the base plate of the optical modulation layer 1.

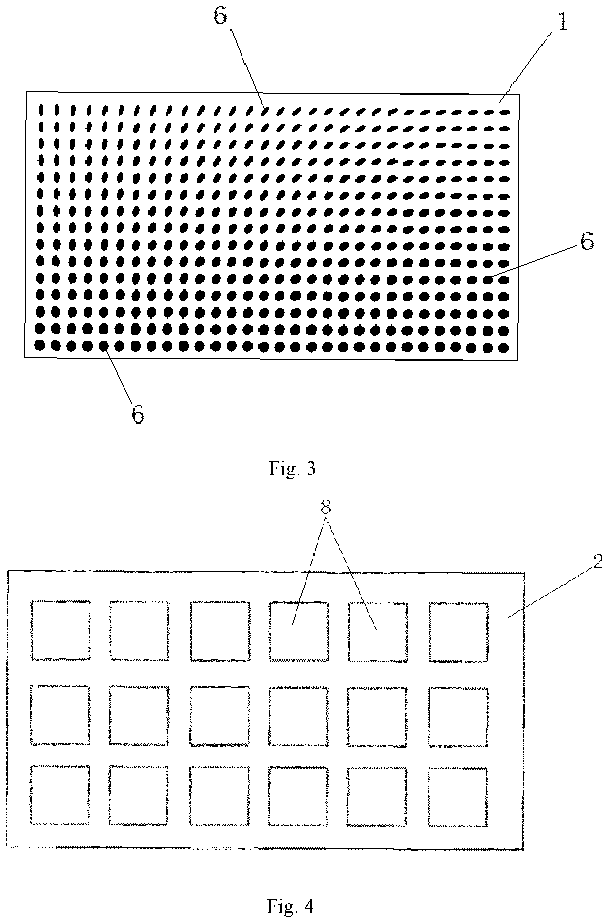

It can be understood that, as shown in Fig. 3, since all the modulation holes 6 in this embodiment are arranged according to the same pattern, that is, being gradually arranged row by column from small to large according to the structural parameters of a length of the major axis, a length of the minor axis and an angle of rotation. As result, all the modulation holes 6 on the optical modulation layer 1 can be regarded as an integral modulation unit 5, and can also be arbitrarily divided into several modulation units 5. The arbitrarily divided modulation units 5 have different modulating roles on the spectrum. In theory, an infinite number of modulated spectrum samples can be obtained, which dramatically increases the amount of data for reconstructing the original spectrum, and is helpful for restoring the spectral pattern of the broadband spectrum. Then, the effectiveness of the modulating roles of the modulation unit 5 on the light having different wavelengths can be determined according to the structural parameter characteristics of the modulation holes 6 inside each modulation unit 5.

It can be understood that the specific cross-sectional shape of the modulation holes 6 above includes a circle, an ellipse, a cross, a regular polygon, a star, or a rectangle, or any combination thereof. Correspondingly, the structural parameters of the modulation holes 6 above include an inner diameter, a length of a major axis, a length of a minor axis, an angle of rotation, the number of angles, or length of a side.

The base plate of the optical modulation layer 1 according to the Embodiment I has a thickness of 60nm to 1200nm. The optical modulation layer 1 and the photoelectric detection layer 2 are directly connected or connected through a light-permeable medium layer 4. The photoelectric detection layer 2 and the signal processing circuit layer 3 are electrically connected. In some embodiments, as shown in Fig. 3, all the modulation holes 6 on the optical modulation layer 1 are elliptical, and lengths of the major axes and the lengths of minor axes of all the elliptical modulation holes 6 are increased row by row and column by column, respectively. In Fig. 3, the horizontal direction is taken as the horizontal axis, and the vertical direction is taken as the vertical axis, all the elliptical modulation holes 6 are rotated from the vertical axis to the horizontal axis row by column, and the rotation angles are gradually increased. All the modulation holes 6 constitute an overall two-dimensional graphic structure which is a matrix structure as a whole, and the area of the matrix structure ranges from 5 µm² to 4 cm².

When the optical modulation micro-nano structure described in this embodiment is manufactured, a silicon-based material is selected as the material of the optical modulation layer 1 and the photoelectric detection layer 2 at the same time, so as to have a good compatibility in the process of the preparation technology. When the optical modulation layer 1 is prepared, the optical modulation layer 1 may be directly generated on the photoelectric detection layer 2, or the prepared optical modulation layer 1 may be transferred to the photoelectric detection layer 2 firstly.

As can be seen, the direct generation of the optical modulation layer 1 specifically includes: directly growing the optical modulation layer 1 arranged according to the structure shown in Fig. 3 on the photoelectric detection layer 2 by a deposition; or installing a substrate made of the silicon-based material on the photoelectric detection layer 2, then performing micro-nano processing and perforating on the substrate according to the structure shown in Fig. 3 to obtain the optical modulation layer 1.

The process of the directly growing by the deposition above is: Step one, depositing a silicon flat panel with a thickness of 100nm to 400nm on the photoelectric detection layer 2 through sputtering, chemical vapor deposition and etc. Step two, drawing the desired two-dimensional graphic structure as shown in Fig. 3 on the silicon flat panel by using a pattern transfer method such as photoetching, electron beam exposure and etc. The two-dimensional graphic structure is specifically that, only the minor axis and angle of rotation of the elliptical modulation hole 6 is gradually adjusted. The major axis of the ellipse is selected from a fixed value in the range of 200nm to 1000nm, for example, 500 nm, and the length of the minor axis varies within the range of 120nm to 500nm. The angle of rotation of the ellipse varies within the range of 0° to 90° and the arrangement period of the ellipse is a fixed value in the range of 200nm to 1000nm, for example, 500nm. An overall pattern range of the two-dimensional graphic structure is about a rectangular array structure with a length of 115µm and a width of 110µm. Step three, etching the silicon flat panel through reactive ion etching, inductively coupled plasma etching, ion beam etching and etc. to obtain the desired optical modulation layer 1 and finally, electrically connecting the optical modulation layer 1 and the photoelectric detection layer 2 as a whole to the signal processing circuit layer 3.

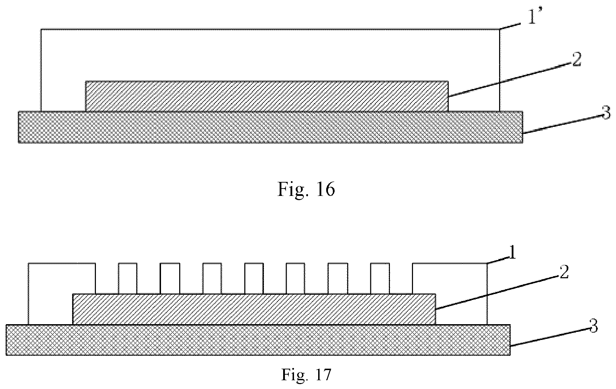

Further, this embodiment provides another process for preparing the optical modulation micro-nano structure, which is specifically that the photoelectric detection layer 2 is equipped with a III-V group detector that is specifically a GaAs/InGaAs quantum well detector. As shown in Fig. 16, the detector is reversely bonded to a CMOS circuit. The detector includes a GaAs substrate 1' and an InGaAs quantum well photoelectric detection layer 2. As shown in Fig. 17, after the substrate 1' is directly thinned, micro-nano processing is performed on the substrate 1' so as to have a two-dimensional graphic structure to form the optical modulation layer 1. The difference between this preparation process and the above-mentioned micro-nano processing and perforating only lies in that an upper surface of the photoelectric detection layer 2 composed of detectors is directly used as the substrate 1' for micro-nano processing, thereby ensuring a tight connection between the processed and prepared optical modulation layer 1 and the photoelectric detection layer 2, and avoiding gaps from affecting the effectiveness of the light modulation.

The transfer preparation method of the optical modulation layer 1 above is specifically: firstly, performing micro-nano processing and perforating on the substrate according to the structure shown in Fig. 3 to obtain the prepared optical modulation layer 1, then transferring the prepared optical modulation layer 1 onto the photoelectric detection layer 2. As can be seen, the process of transferring the optical modulation layer 1 is that, firstly preparing the optical modulation layer 1 on a silicon wafer or SOI (referring to the silicon-on-insulator silicon wafer structure) according to the parameters above, then transferring the optical modulation layer 1 onto the photoelectric detection layer 2 with transfer methods, and finally connecting the optical modulation layer 1 and the photoelectric detection layer 2 as a whole to the signal processing circuit layer 3.

It should be understood that, the optical modulation micro-nano structure capable of modulating light described in this embodiment includes, but is not limited to, one-dimensional and two-dimensional photonic crystals, surface plasmon polaritons, metamaterials and metasurfaces. The specific materials may include silicon, germanium, silicon germanium materials, silicon compounds, germanium compounds, metals, III-V group materials and etc. As an embodiment, the silicon compounds include, but are not limited to, silicon nitride, silicon dioxide, silicon carbide and etc. The material of the light-permeable medium layer 4 may include materials having a low refractive index such as silicon dioxide, high-molecular polymer and etc. The photoelectric detector may be selected from a silicon detector (the detection range is 780nm to 1100nm), a III-V group semiconductor (such as InGaAs/InAlAs, GaAs/AlGaAs) detector (the detection range is 1000nm to 2600nm), an antimonide (such as InSb) detector (the detection range is 1µm to 6.5µm) a HgCdTe detector (the detection range is 0.7 to 25µm) and etc.

Embodiment I also provides a micro-integrated spectrometer. As shown in Fig. 1, the micro-integrated spectrometer includes the above-mentioned optical modulation micro-nano structure, the photoelectric detection layer 2, and the signal processing circuit layer. The optical modulation micro-nano structure, the photoelectric detection layer 2 and the signal processing circuit layer are vertically connected from top to bottom and parallel to each other. In this embodiment, the optical modulation micro-nano structure is configured to perform light modulation on the incident light to obtain a modulated spectrum; the photoelectric detection layer 2 is configured to receive the modulated spectrum and provide differential responses to the modulated spectrum; the signal processing circuit layer 3 is configured to process the differential responses based on an algorithm to obtain an original spectrum by reconstruction.

The optical modulation micro-nano structure described in this embodiment is as described above, and is not repeated herein. The photoelectric detection layer 2 in this embodiment is shown in Fig. 2 and Fig. 4. The photoelectric detection layer 2 includes several detection units 7. Each detection unit 7 inside the photoelectric detection layer 2 is equipped with at least one photoelectric detector whose detection range is slightly larger than a structural range of the modulation hole 6. The photoelectric detection layer 2 in an array structure composed of several detection units 7 can transmit detected signals to the signal processing circuit layer 3 through electrical contact.

In this embodiment, several modulation holes 6 may correspond to one detection unit 7 at the same time, or each of the modulation holes 6 may correspond to one or more modulation units 7, respectively. That is to say, each modulation unit 5 corresponds in the vertical direction to one or more detection units 7. In this way, it only needs to satisfy that at least one modulation hole 6 inside the same modulation unit 5 corresponds to at least one detection unit 7. This structural arrangement ensures that the modulation unit 5 can always modulate incident light having at least one wavelength, and that the modulated light can be received by the detection unit 7. In order to prevent the detection units 7 from interfering with each other during operation, a gap 8 is preferably left between two adjacent detection units 7.

The signal processing circuit layer 3 described in this embodiment is equipped with an algorithm processing system capable of processing the differential responses based on an algorithm to obtain the original spectrum by reconstruction.

The complete process of the optical modulation micro-nano structure and the micro-integrated spectrometer described in this embodiment for detecting the spectrum is: modulating a spectrum with the optical modulation layer 1 when the spectrum is perpendicularly incident from above the optical modulation layer 1 through the optical modulation micro-nano structure, to obtain different responsive spectra in different modulation units 5. Each of the modulated responsive spectra is irradiated onto the photoelectric detection layer 2 respectively, and the responsive spectra received by the correspondingly provided detection units 7 are different, so as to obtain differential responses which refers to differencing between signals of the responsive spectra obtained through the modulation of each modulation unit 5. Finally, the signal processing circuit layer 3 uses the algorithm processing system to process the differential responses, thereby obtaining the original spectrum by reconstruction. The reconstructing process is implemented by a data processing module including spectral data preprocessing and a data predicting model. In this embodiment, the spectral data preprocessing refers to preprocessing noises existing in the differential responses data obtained above. The processing methods used for the spectral data preprocessing include, but are not limited to, Fourier transform, differential, and wavelet transform. The data predicting model includes predictions of related blood glucose parameters including blood glucose concentration and the like from spectral data information. The algorithms used include, but are not limited to, least squares method, principal component analysis, and artificial neural network.

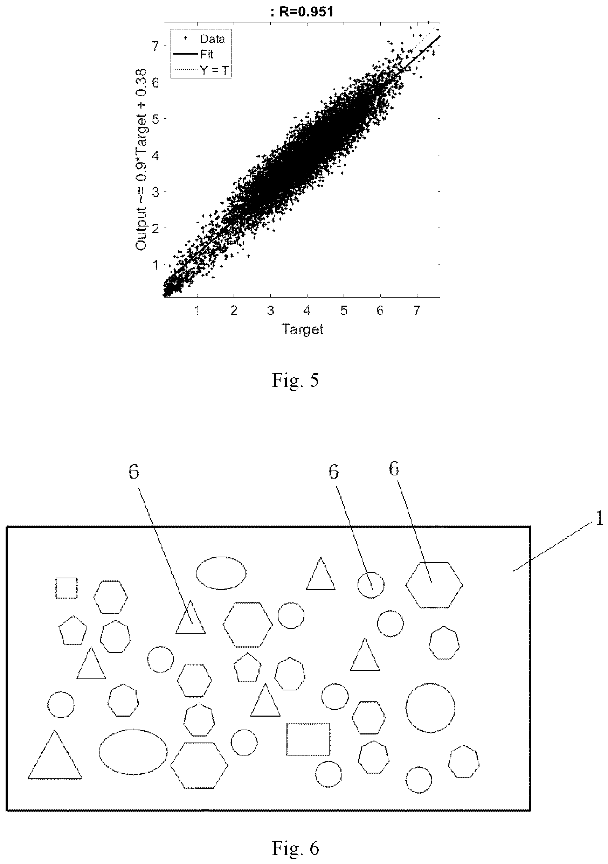

Fig. 5 illustrates a spectral analysis effect during spectral analysis with the optical modulation micro-nano structure and the spectrometer obtained through actual preparation according to the embodiment above. As shown in Fig. 5, it can be known that the micro-nano structure can detect a spectrum with a spectral range from 600nm to 800nm and a spectral width of 200nm, and achieve an effect that the accuracy of measuring the spectra is greater than 95.1%.

### Embodiment II

The structures, principles, spectrum modulation methods and preparation methods of the optical modulation micro-nano structure and the micro-integrated spectrometer described in Embodiment II are basically the same as those in Embodiment I, and the same contents are not described repeatedly except that:
as shown in Fig. 6, in the micro-nano structure described in this embodiment, an integral modulation unit 5 is provided on the optical modulation layer 1. Each of the modulation holes 6 in the two-dimensional graphic structure provided in the modulation unit 5 respectively has a specific cross-sectional shape, and each of the modulation holes 6 is freely combined and arranged according to the specific cross-sectional shape. As can be seen, in the two-dimensional graphic structure, some of the modulation holes 6 have the same specific cross-sectional shapes, and each of the modulation holes 6 having the same specific cross-sectional shape constitutes a plurality of modulation hole 6 groups, and each of the modulation hole 6 groups has specific cross-sectional shapes different from each other, and all the modulation holes 6 are freely combined.

It can be understood that, the modulation unit 5 as a whole can be regarded as modulating a spectrum having a specific wavelength, or can be freely divided into several modulation units having modulation holes 6, so as to be able to modulate the spectrum having multiple different wavelengths, thereby increasing the flexibility and diversity of light modulation.

### Embodiment III

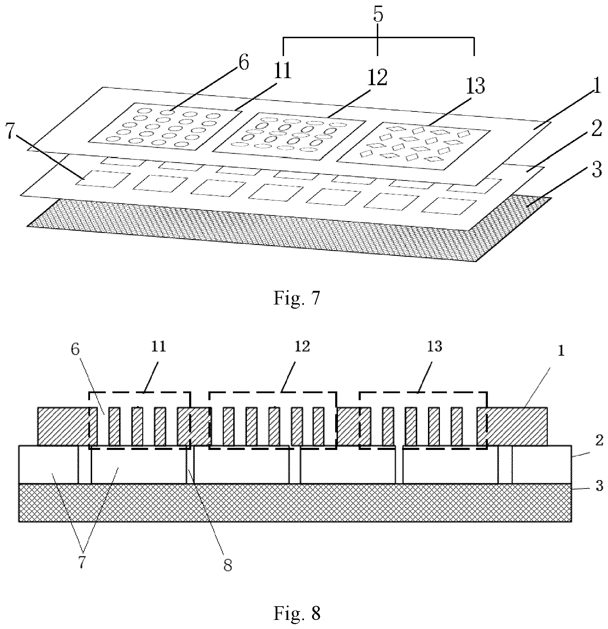

The structures, principles, spectrum modulation methods and preparation methods of the optical modulation micro-nano structure and the micro-integrated spectrometer described in Embodiment III are basically the same as those in Embodiment II, and the same contents are not described repeatedly except that:
as shown in Fig. 7 and Fig. 8, two or more than two modulation units 5 are arranged on the modulation unit 1 of the optical modulation micro-nano structure in this embodiment. In each modulation unit 5, when respective modulation holes 6 are arranged and combined according to a specific cross-sectional shape, the arrangement order is being arranged row by row or column by column according to a preset period order.

In this embodiment, all the modulation holes 6 are divided into several modulation units 5 according to the specific cross-sectional shapes, and the modulation holes 6 inside each of the modulation units 5 have specific cross-sectional shapes different from each other. The modulation holes 6 inside the same modulation unit 5 have a same specific cross-sectional shape, but each of the modulation holes 6 is arranged in an array in an order that the sizes of the structural parameters are gradually varied. As a result, each modulation unit 5 has different modulation roles, and can modulate the spectrum having different wavelengths. By changing the gradual order of the structural parameters of the modulation holes 6 inside the modulation units 5 and/or the specific cross-sectional shapes of the modulation holes 6 according to the modulation requirement, the modulation role and/or the modulated object of the current modulation unit 5 can be changed.

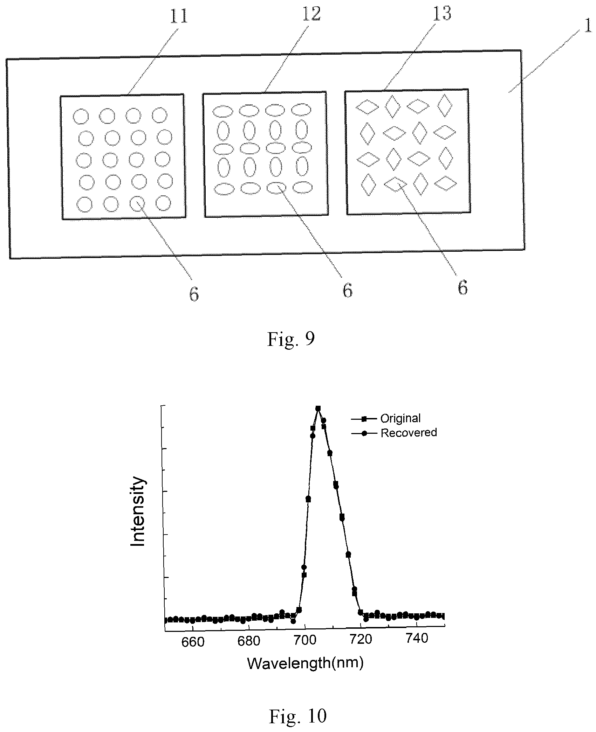

As can be seen, as shown in Fig. 9, three modulation units 5, which are respectively a first modulation unit 11, a second modulation unit 12, and a third modulation unit 13 are distributed on a base plate of the optical modulation layer 1. In this embodiment, the modulation holes 6 inside the first modulation unit 11 are all circular, and each of the modulation holes 6 has the same structural parameters; the first modulation unit 11 has a first modulating mode with respect to the input spectrum. The modulation holes 6 inside the second modulation unit 12 are all oval, and each of the modulation holes 6 is arranged row by row in a periodic manner according to the structural parameters, that is, the horizontally disposed oval modulation holes 6 and the vertically disposed oval modulation holes 6 are staggered row by row; the second modulation unit 12 has a second modulating mode with respect to the input spectrum. The modulation holes 6 inside the third modulation unit 13 are all rhombic, and each of the modulation holes 6 is arranged row by column in a periodic manner according to the structural parameters, that is, the horizontal rhombic modulation holes 6 and the vertical rhombic modulation holes 6 are staggered row by row, and at the same time the horizontally disposed rhombic modulation holes 6 and the vertically disposed rhombic modulation holes 6 are staggered column by column; the third modulation unit 12 has a third modulating mode with respect to the input spectrum.

It can be understood that, the "a certain modulating mode for light having different wavelengths" described in this embodiment may include, but is not limited to, effects such as scattering, absorption, transmission, reflection, interference, surface plasmon polariton, resonance and etc. The first, second and third optical modulation methods are different from each other. By the arrangements of the modulation holes 6 inside the modulation units 5, the differences in spectral responses between different units can be improved, and by increasing the number of the units, the sensitivity to the differences between different spectra can be improved.

It can be understood that, for measuring different incident spectra, the modulation role can be changed by adjusting the structural parameters of the modulation holes 6 inside each modulation unit 5. The adjustment of the structural parameters includes, but is not limited to one of the various parameters of the micro-nano structure, such as the period, radius, side length, duty ratio, thickness and etc., or any combination thereof.

It can be understood that, the micro-integrated spectrometer described in this embodiment may apply the modulation unit 5 described in Embodiment I, or the modulation unit 5 described in Embodiment II, or a combination of the modulation units 5 described in Embodiment I and Embodiment II.

In this embodiment, the optical modulation layer 1 is made of a silicon nitride flat panel having a thickness of 200nm to 500nm. The optical modulation layer 1 is provided with 100 to 200 modulation units 5 in total, and each of the modulation units 5 has a length of 4µm to 60µm and a width of 4µm to 60µm. Various geometrical shapes are selected inside each of the modulation units 5 as the specific cross-sectional shapes of the modulation holes 6. Each of the modulation units 5 has a periodic arrangement of the same shape, and its duty ratio is 10% to 90%. The remaining structures are the same as those of Embodiment I or Embodiment II.

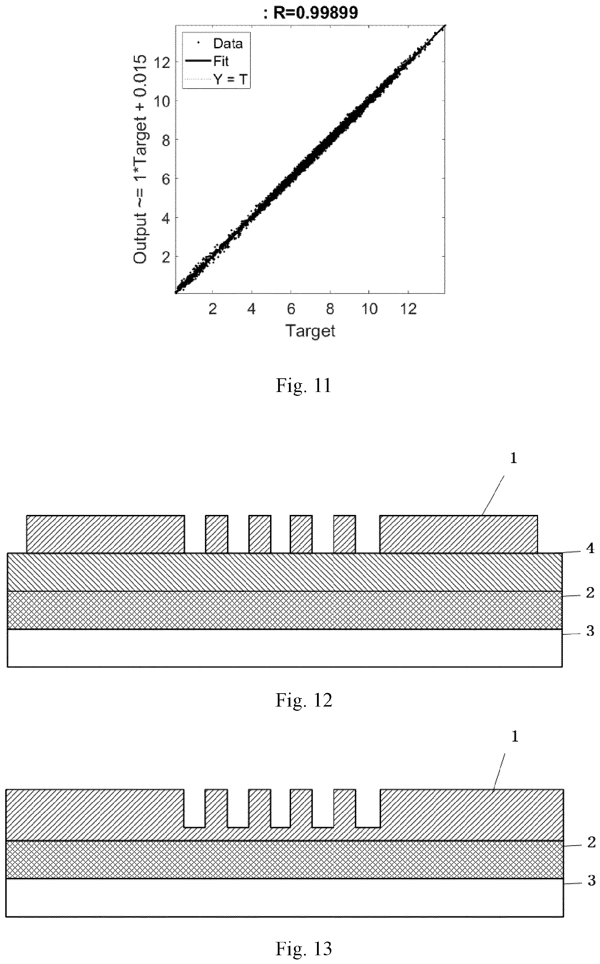

Fig. 10 and Fig. 11 each illustrates a spectral analysis effect during spectral analysis with the optical modulation micro-nano structure and the spectrometer obtained through actual preparation according to the embodiments above. The optical modulation micro-nano structure described in this embodiment mainly detects the spectrum with a single-wavelength. The relation between the wavelength and the intensity of the micro-nano structure is shown in Fig. 10. The central wavelength error between the measured spectrum and the actual spectrum is less than 0.4nm and the detection effect is shown in Fig. 11. The accuracy of the light intensity is greater than 99.89%.

### Embodiment IV

Based on the structures, principles, spectrum modulation methods and preparation methods of the optical modulation micro-nano structure and the micro-integrated spectrometer described in any of the embodiments above, Embodiment IV discloses an optical modulation micro-nano structure, a micro-integrated spectrometer, and a spectrum modulation method. The same contents are not described repeatedly except that:
as shown in Fig. 12, the micro-integrated spectrometer in this embodiment further includes a light-permeable medium layer 4 located between the optical modulation micro-nano structure 1 and the photoelectric detection layer 2.As can be seen, the light-permeable medium layer 4 has a thickness of 50nm to 1µm, and the material may be silicon dioxide.

In the micro-integrated spectrometer described in this embodiment, when a process scheme of directly growing by deposition is applied in the preparation of the optical modulation layer 1, the light-permeable medium layer 4 may be covered on the photoelectric detection layer by chemical vapor deposition, sputtering, and spin coating, then the deposition and etching of the optical modulation layer 1 may be performed on the top of the light-permeable medium layer 4. When a transfer process scheme is applied, silicon dioxide can be used as a preparation substrate for the optical modulation layer 1, and the optical modulation layer 1 is prepared by directly processing on an upper half of the substrate with micro-nano drilling, then a lower half of the silicon dioxide substrate is directly used as the light-permeable medium layer 4, and the prepared optical modulation layer 1 and the light-permeable medium layer 4 are transferred to the photoelectric detection layer as a whole.

It can be understood that, the light-permeable medium layer 4 described in this embodiment may also be arranged as that, the optical modulation micro-nano structure on the photoelectric detection layer 2 as a whole is supported through an external support structure, so that the optical modulation micro-nano structure is suspended with respect to the photoelectric detection layer 2. As a result, an air portion between the optical modulation layer 1 and the photoelectric detection layer 2 is the light-permeable medium layer 4.

### Embodiment V

On the basis of Embodiment II, Embodiment V further provides an optical modulation micro-nano structure, a micro-integrated spectrometer and a spectrum modulation method. The same contents as those of Embodiment II are not described repeatedly in this embodiment except that:
the optical modulation layer 1 described in this embodiment is made based on a horizontally disposed silicon carbide base plate having a thickness of 150nm to 300nm. There are 150 to 300 units on the optical modulation layer 1, and each of the units has a length of 15 to 20µm and a width of 15 to 20µm. Each modulation holes 6 inside the same modulation unit 5 has circular specific cross-sectional shape, and the parameters of each of the units such as the circular hole period, the hole radius, the duty ratio and etc. are different from each other. The specific parameter range is: the period range is 180nm to 850nm, the hole radius range is 20nm to 780nm, and the duty ratio range is 10% to 92%. The photoelectric detection layer 2 is equipped with at least one InGaAs detector.

The preparation process of the optical modulation micro-nano structure described in this embodiment is a transfer process in which the optical modulation layer 1 is firstly prepared and then transferred to the photoelectric detection layer 2.

### Embodiment VI

Based on the structures, principles, spectrum modulation methods and preparation methods of the optical modulation micro-nano structure and the micro-integrated spectrometer described in any of the embodiments above, Embodiment VI discloses an optical modulation micro-nano structure, a micro-integrated spectrometer, and a spectrum modulation method. The same contents are not described repeatedly except that:
as shown in Fig. 13, in the optical modulation micro-nano structure described in this embodiment, respective modulation holes 6 do not penetrate the base plate. It can be understood that, whether the modulation hole 6 penetrates the base plate or not will have no adverse effect on the modulation role of the optical modulation micro-nano structure. This is because that the silicon-based material or other materials selected for the optical modulation layer 1 are light-permeable materials. When a spectrum is incident into the optical modulation layer 1, a modulation role occurs due to the effect of the structure of each of the modulation units 5, but the bottom of the modulation holes 6 do not adversely affect the spectrum modulation.

In the optical modulation micro-nano structure described in this embodiment, the thickness from the bottom of the modulation holes 6 of the optical modulation layer 1 to the bottom of the base plate is 60nm to 1200nm, and the entire base plate has a thickness of 120nm to 2000nm.

### Embodiment VII

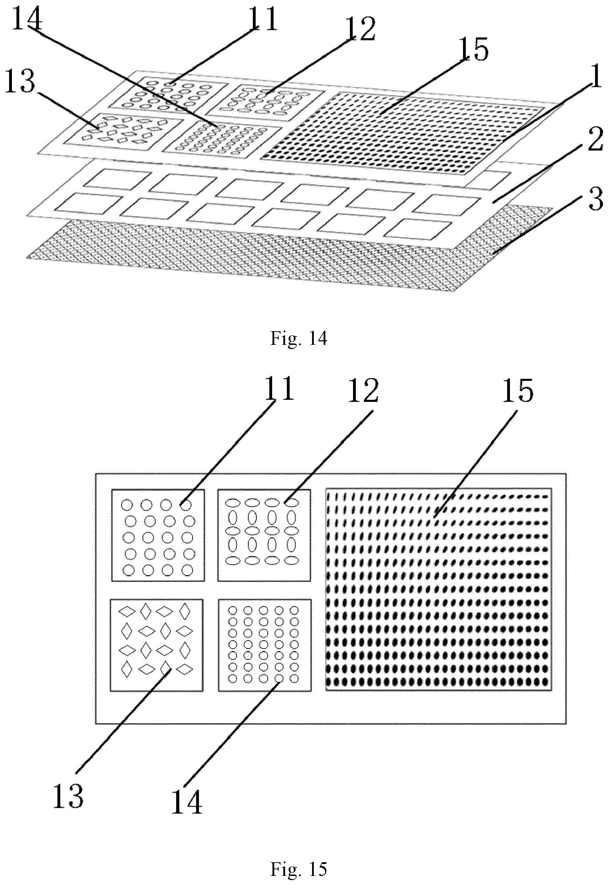

Based on the combinations of the various embodiments above, Embodiment VII provides an optical modulation micro-nano structure, a micro-integrated spectrometer and a spectrum modulation method. The same contents are not described repeatedly, except that:
as shown in Fig. 14 and Fig. 15, in the optical modulation micro-nano structure in this embodiment, five modulation units 5, which are a first modulation unit 11, a second modulation unit 12, a third modulation unit 13, a fourth modulation unit 14 and a fifth modulation unit 15, respectively, are distributed on the base plate of the optical modulation layer. In this embodiment, the fifth modulation unit 15 has the largest range, and its area is not smaller the total area of the former four modulation units.

As can be seen, the first modulation unit 11, the second modulation unit 12, the third modulation unit 13, and the fourth modulation unit 14 are arranged in a matrix as a whole, wherein the modulation holes 6 inside the first three modulation units 11, 12, and 13 are arranged in a same manner as that of the modulation holes 6 described in Embodiment III. The modulation holes 6 of the fourth modulation unit 14 and the first modulation unit 11 have the same and circular specific cross-sectional shapes, but the modulation holes 6 of the fourth modulation unit 14 have different structural parameters from those of the modulation holes 6 of the first modulation unit 11. As can be seen, the inner diameters of the modulation holes 6 of the fourth modulation unit 14 are smaller than those of the modulation holes 6 of the first modulation unit 11. Therefore, the fourth modulation unit 14 has a fourth modulating mode for the input spectrum. The two-dimensional graphic structure formed by each of the modulation holes 6 inside the fifth modulation unit 15 is the same as that described in Embodiment I, and the fifth modulation unit 15 has a fifth modulating mode for the input spectrum.

It can be seen from above that, the optical modulation micro-nano structure described in this embodiment VII uses the differences in the specific cross-sectional shapes of different modulation holes 6 between different units, and the specific arrangement of the modulation holes 6 in a same unit, to implement different modulation roles on the spectrum with different wavelengths by adjusting the specific cross-sectional shapes of the modulation holes 6, the structural parameters of the modulation holes 6 and the arrangement period of the modulation holes 6.

It can be understood that, for the structure of the modulation units 5 that are arranged in a gradual array according to Embodiment I and Embodiment II, the modulation units 5 arbitrarily divided have different modulating roles on the spectrum. In theory, an infinite number of modulated spectrum samples can be obtained, which dramatically increases the amount of data for reconstructing the original spectrum, and is helpful for restoring the spectral pattern of the broadband spectrum.

As for the structure of the periodic modulation units 5 according to Embodiment III, it can generate the dispersion and resonance effects of the two-dimensional period. The resonance role includes, but is not limited to, the principles of energy band control of photonic crystal, resonance of the two-dimensional grating and etc. The detection accuracy for specific wavelengths can be enhanced through resonance.

When the modulation units 5 in Embodiment I, Embodiment II and Embodiment III are applied to a chip at the same time, the two advantages above can be integrated. When the size range of the optical modulation layer is cut, the optical modulation micro-nano structures of the three embodiments above can be prepared into structures of the order of micrometers or even smaller, which is of great significance for the miniaturization and microminiaturization manufacture of the micro-integrated spectrometers. The above-mentioned optical modulation micro-nano structure is cooperated with a photoelectric detector composed of different photoelectric detectors, which, in principle, can achieve the full-wave band spectral detection, thereby making the broad-spectrum detection performance of the spectrometer better.

In conclusion, the optical modulation micro-nano structure provided by this embodiment includes an optical modulation layer 1 located on a photoelectric detection layer 2. The optical modulation layer 1 can modulate the incident light to form differential responses on the photoelectric detection layer 2, so as to obtain the original spectrum by reconstruction. The optical modulation micro-nano structure can replace the various types of precise optical components in the existing spectrometers, so as to achieve the applicable type of the spectrometer in the field of micro-nano structures, so that the micro-integrated spectrometer can operate without gratings, prisms, reflecting mirrors or other similar spatial beam-splitting elements, thereby overcoming the defects that the existing spectrometers are bulky, heavy and expensive for depending too much on the precise optical components.

Modulation holes 6 inside a same modulation unit 5 on the optical modulation layer 1 are arranged into a two-dimensional graphic structure with a specific pattern. Different two-dimensional graphic structures are used to modulate light at different wavelengths, wherein the modulating role includes but is not limited to the roles such as scattering, absorption, transmission, reflection, interference, surface plasmon polariton, resonance and etc. In addition, differences in the spectral response between different regions can also be improved by using the differences between the two-dimensional graphic structures, thereby improving the analysis accuracy of the spectrometer.

It is not necessary to consider the issues such as precise alignment and etc. for each of the modulation units 5 in the optical modulation layer 1, and the spectrometer made on the basis of the optical modulation micro-nano structure not only can ensure the high precision, but also does not need to increase the optical path. Therefore, the internal structure of the spectrometer does not need to be constructed too large so that the micro-integrated spectrometer is more convenient to use, and the measurement accuracy of the spectrometer will not be adversely affected. The size of the spectrometer can also be reduced to the chip level, with stable performance and reduced costs, so that the large-scale tape-out production of the micro-integrated spectrometer can be achieved. Compared with the existing spectrometers, the micro-integrated spectrometer has more stable production and preparation technologies, and lower production and use costs.

The embodiments of the present disclosure are presented for the purposes of illustration and description, and are not exhaustive or to limit the present disclosure to the disclosed forms. Many modifications and variations are obvious to the person of ordinary skills in the art. The embodiments are selected and described in order to better illustrate the principles and practical applications of the present disclosure, and to make the person of ordinary skills in the art to appreciate the present disclosure so as to design various embodiments suitable for specific uses and having various modifications.

In the description of the present disclosure, unless specified otherwise, "a plurality of" and "a number of" means two or more; unless specified otherwise, "notch" means the shapes other than the shape with a flush cross section. The orientation or position relations indicated by the terms "upper", "lower", "left", "right", "inner", "outer", "front end", "rear end", "head portion", "tail portion" etc. are based on the orientation or position relations shown in the drawings, which is merely for the convenience of describing the present disclosure and simplifying the description, and is not to indicate or imply that the device or component referred to must have a specific orientation, be constructed and operated in the specific orientation. Therefore, it cannot be construed as limiting the present disclosure. In addition, the terms "first", "second" and "third" etc. are for the purpose of description, and cannot be construed as indicating or implying the relative importance.

In the description of the present disclosure, it should be noted that unless specifically defined or limited, the terms "mount", "connect with", and "connect to" should be understood in a broad sense, for example, they may be fixed connections or may be removable connections, or integrated connections; may be mechanical connections or electrical connections; they may also be direct connections or indirect connections through intermediate mediums. For a person of ordinary skills in the art, the specific meanings of the terms above in the present disclosure can be understood according to specific situations.

## Claims

1. An optical modulation micro-nano structure, comprising an optical modulation layer located on a photoelectric detection layer; wherein the optical modulation layer comprises a base plate and at least one modulation unit; the base plate is provided on the photoelectric detection layer, and each of the modulation units is located on the base plate; each of the modulation units is provided with several modulation holes penetrating into the base plate, and respective modulation holes inside a same modulation unit are arranged into a two-dimensional graphic structure with a specific pattern.

2. The optical modulation micro-nano structure of claim 1, wherein, the specific pattern of the two-dimensional graphic structure comprises that:
all the modulation holes inside a same two-dimensional graphic structure have a same specific cross-sectional shape and the respective modulation holes are arranged in an array in an order that sizes of structural parameters are gradually varied; and/or
the respective modulation holes inside the same two-dimensional graphic structure respectively have a specific cross-sectional shape and the respective modulation holes are combined and arranged according to the specific cross-sectional shape.

3. The optical modulation micro-nano structure of claim 2, wherein, the structural parameters of the modulation hole comprise an inner diameter, a length of a major axis, a length of a minor axis, an angle of rotation, a length of a side or the number of angles; the specific cross-sectional shape of the modulation hole comprises a circle, an ellipse, a cross, a regular polygon, a star, or a rectangle.

4. The optical modulation micro-nano structure of claim 2, wherein the arrangement order is being arranged row by row or column by column according to a preset period order when the respective modulation holes are arranged and combined according to the specific cross-sectional shape.

5. The optical modulation micro-nano structure of any of claims 1 to 4, wherein, a bottom of the modulation hole penetrates the base plate or does not penetrate the base plate.

6. The optical modulation micro-nano structure of any of claims 1 to 4, wherein, the optical modulation layer is directly generated on the photoelectric detection layer, and the generating of the optical modulation layer comprises depositing or disposing a substrate on the photoelectric detection layer based on an etching of the substrate; or transferring a prepared optical modulation layer onto the photoelectric detection layer.

7. A micro-integrated spectrometer, comprising
an optical modulation micro-nano structure of any of claims 1-6, configured to perform light modulation on incident light to obtain a modulated spectrum;
a photoelectric detection layer located below the optical modulation micro-nano structure, and configured to receive the modulated spectrum, and provide differential responses with respect to the modulated spectrum;
a signal processing circuit layer located below the photoelectric detection layer and configured to reconstruct the differential responses to obtain an original spectrum.

8. The micro-integrated spectrometer of claim 7, wherein, the micro-integrated spectrometer further comprises:
a light-permeable medium layer located between the optical modulation micro-nano structure and the photoelectric detection layer.

9. The micro-integrated spectrometer of claim 7, wherein, the photoelectric detection layer comprises at least one detection unit, each modulation unit of the optical modulation micro-nano structure is correspondingly provided on at least one of the detection units respectively, and all the detection units are electrically connected to each other through the signal processing circuit layer.

10. A spectrum modulation method, comprising:
performing light modulation on incident light using an optical modulation micro-nano structure to obtain a modulated spectrum;
receiving the modulated spectrum and providing differential responses with respect to the modulated spectrum using a photoelectric detection layer.
reconstructing the differential responses using a signal processing circuit layer to obtain an original spectrum.
